(19) Europäisches Patentamt / European Patent Office / Office européen des brevets

(11) **EP 3 645 315 B1**

(12) **FASCICULE DE BREVET EUROPEEN**

(45) Date de publication et mention de la délivrance du brevet:
**16.06.2021 Bulletin 2021/24**

(21) Numéro de dépôt: **18737696.7**

(22) Date de dépôt: **20.06.2018**

(51) Int Cl.:
*B60C 9/20* *(2006.01)*   *B60C 15/06* *(2006.01)*

(86) Numéro de dépôt international:
**PCT/FR2018/051479**

(87) Numéro de publication internationale:
**WO 2019/002726 (03.01.2019 Gazette 2019/01)**

(54) **PNEUMATIQUE ALLEGE**

**LEICHTGEWICHTIGER REIFEN**

**LIGHTWEIGHT TYRE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2017 FR 1755856**

(43) Date de publication de la demande:
**06.05.2020 Bulletin 2020/19**

(73) Titulaire: **Compagnie Générale des Etablissements Michelin**
**63000 Clermont-Ferrand (FR)**

(72) Inventeurs:
• **JOULIN, Emmanuel**
**63040 Clermont-Ferrand Cedex 9 (FR)**

• **FOURNIER, Orel**
**63040 Clermont-Ferrand Cedex 9 (FR)**
• **GUERBERT-JUBERT, Jean-Luc**
**63040 Clermont-Ferrand Cedex 9 (FR)**

(74) Mandataire: **Le Cam, Stéphane Georges Elie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
| EP-A1- 1 393 931 | EP-A2- 0 818 331 |
| DE-A1-102013 107 475 | FR-A- 1 272 246 |
| FR-A1- 2 787 744 | JP-A- 2001 225 618 |

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Lors de la fabrication de tels pneumatiques, la dernière étape consiste à cuire le pneumatique pour permettre la réticulation et/ou vulcanisation des différents mélanges polymériques constitutifs du pneumatique. Cette étape de cuisson du pneumatique est une étape qui immobilise le pneumatique pendant plusieurs minutes et est considérée à ce titre comme une étape pertinente au regard de la productivité relative à la fabrication d'un pneumatique. En outre, cette étape qui se fait à une température élevée est consommatrice d'énergie. Ces temps de cuisson peuvent également conduire à devoir augmenter le nombre d'outils pour éviter de devoir créer des stocks temporaires de produits attendant leur cuisson, ces stocks ne faisant qu'augmenter si le nombre d'outils n'est pas adapté. Une augmentation du nombre d'outils de cuisson conduit nécessairement à des coûts supplémentaires du fait des machines, de la consommation énergétique et de l'encombrement.

La durée de la cuisson est notamment imposée par le temps nécessaire pour obtenir des matériaux constitutifs avec les propriétés recherchées sachant que la réticulation et/ou vulcanisation ne se déroule pas de la même façon pour des mélanges radialement ou axialement apparents que pour des mélanges internes. De la même façon, la réticulation et/ou vulcanisation varie selon la nature et les épaisseurs des mélanges.

Les parties du pneumatique qui présentent les épaisseurs les plus importantes sont d'une part le sommet et plus particulièrement les épaules du pneumatique et d'autre part les zones des bourrelets du pneumatique.

L'épaisseur du sommet du pneumatique est notamment définie par le nombre de couches d'éléments de renforcements qui forme l'armature sommet du pneumatique, les épaisseurs des différentes couches de mélanges polymériques environnantes étant adaptées.

L'épaisseur des zones des bourrelets est définie par l'ensemble des constituants desdites zones qui sont des couches d'éléments de renforcement et des couches de mélanges polymériques, l'augmentation du nombre de couches d'éléments de renforcement conduisant le plus souvent à une augmentation du nombre de couches de mélanges polymériques. La dimension de la tringle, et plus précisément sa section, est plus habituellement définie par la dimension et l'usage du pneumatique et est peu variable pour un pneumatique donné quelle que soit l'orientation choisie en termes de conception de ces zones des bourrelets.

Il est connu que ces zones du pneumatique qui sont parmi les plus épaisses sont constituées des mélanges polymériques dont les temps de vulcanisation de certains vont être parmi les plus longs du fait de leur éloignement des sources de chaleur. Ces zones du pneumatique qui sont parmi les plus épaisses imposent ainsi des temps de vulcanisation minimum pour la cuisson globale du pneumatique.

D'autre part, certains pneumatiques actuels, dits "routiers", sont destinés à rouler à des vitesses moyennes élevées et sur des trajets de plus en plus longs, du fait de l'amélioration du réseau routier, de la croissance du réseau autoroutier dans le monde et de l'apparition de véhicules à conduite de plus en plus autonome. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de ces couches de sommet, ont pour conséquence l'apparition et la propagation de fissures dans la gomme au niveau desdites extrémités.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Concernant les zones des bourrelets de pneumatiques les demandes de brevet FR 2 787 744 et EP 0 818 331 décrivent notamment plusieurs couches de matériaux polymériques radialement à l'extérieur de la tringle, le document FR 2 787 744 décrivant en outre le couplage et découplage du retournement de la couche d'armature carcasse avec la partie principale de la couche d'armature carcasse.

Par ailleurs, certains usages de pneumatiques sur des véhicules pour poids-lourds par exemple de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux supplémentaires pour séparer les extrémités de couches et assurer le positionnement souhaité des différentes extrémités.

Quelle que soit l'une de ces solutions telles que présentées précédemment, la présence d'une ou plusieurs couches d'éléments de renforcement supplémentaires conduit à une masse plus importante du pneumatique et à des coûts de fabrication des pneumatiques plus importants, d'une part du fait des couches supplémentaires et d'autre part du fait de temps de cuisson plus important.

Il est par ailleurs connu de l'homme du métier qu'il peut être souhaitable de modifier les conceptions de pneumatiques notamment en vue de l'amélioration de performances en termes de résistance au roulement conduisant à un allégement du pneumatique.

Un tel allègement peut concerner le sommet mais alors il faut veiller à conserver des performances du pneumatique en termes d'endurance acceptables.

La demande WO2013053879 décrit par exemple un pneumatique dont l'armature sommet comporte une couche d'éléments de renforcement dont la présence peut permettre de diminuer le nombre de couches d'éléments de renforcement et en conséquence le volume de mélanges polymériques ou bien la dimension des éléments de renforcement de certaines couches d'éléments de renforcement, notamment leur diamètre, et donc les épaisseurs des mélanges polymériques formant ces couches.

L'allègement du pneumatique peut encore concerner les zones du bourrelet mais là encore il faut veiller à conserver des performances du pneumatique en termes d'endurance acceptables.

Il est par exemple connu de la demande de brevet WO 10/055118 d'utiliser des câbles d'armature de carcasse fortement pénétrés par des mélanges polymériques, ceux-ci étant avantageusement positionnées au sein du câble lors de sa fabrication, pour diminuer les volumes de certains mélanges polymériques constitutifs du pneumatique ou bien supprimer des couches de mélanges polymériques prévues habituellement pour protéger les éléments de renforcement de l'armature de carcasse lors de l'utilisation du pneumatique. De telles réalisations peuvent permettre d'alléger les pneumatiques.

De telles conceptions de pneumatiques peuvent conduire à diminuer les temps de cuisson du pneumatique pour aboutir à la bonne vulcanisation des mélanges polymériques assurant les propriétés souhaitées du pneumatique. Cette diminution du temps de cuisson conduit par ailleurs à des coûts énergétiques pour la production de pneumatiques qui peuvent être diminués voire à une productivité améliorée du fait de temps d'occupation des moules de cuisson réduits.

Lorsque les diminutions d'épaisseur concernent à la fois la zone du sommet du pneumatique et la zone des bourrelets du pneumatique, il faut veiller à ce que les temps de cuisson souhaités soient bien respectés dans chacune des zones.

Il est ainsi par exemple connu du document US 4568259 des structures de moules de cuisson de pneumatiques complexes pour permettre des transferts de chaleur différents selon les zones du pneumatiques. De tels moules sont complexes à réaliser et en outre conduisent à des procédés de fabrication des pneumatiques plus onéreux.

Il est par ailleurs connu de l'homme du métier du pneumatique qu'il est possible de modifier le temps nécessaire à la polymérisation des mélanges par l'ajout d'accélérateur ou de retardateur de vulcanisation. De tels exemples sont par exemple décrits dans les revues des Techniques de l'ingénieur « Caoutchouc : méthodes d'obtention et propriétés » sous la référence AM7705 V1 du 10 janvier 2015 issu de « Matériaux Plastiques et composites » par Yves Zélicourt et « Matières premières du caoutchouc » sous la référence AM8010 V1 du 10 décembre 2016 issu de « Matériaux Plastiques et composites » par Claude Janin. Il est ainsi possible de modifier les mélanges polymériques dans le sommet et les zones du bourrelet du pneumatique pour adapter les temps nécessaires à la polymérisation, au risque toutefois de modifier les propriétés des pneumatiques du fait de ces constituants. Par ailleurs, les coûts de production risquent d'être augmentés notamment parce que les mélanges devront être adaptés en fonction de la dimension ; cela signifie que des mélanges polymériques différents doivent être fabriqués et stockés pour pouvoir réaliser différentes dimensions de pneumatiques.

Les inventeurs se sont ainsi donnés pour mission la conception de pneumatiques allégés dont les performances notamment d'endurance sont conservées et dont les coûts de fabrication sont diminués.

Ce but est atteint selon l'invention par un pneumatique pour véhicule de type poids lourd, destiné à être monté sur une jante creuse (15° drop centre), à armature de carcasse radiale, constituée d'une unique couche d'armature de carcasse formée d'éléments de renforcement insérés entre deux couches de calandrage de mélange polymérique, ledit pneumatique comprenant une armature de sommet comprenant deux couches de sommet de travail d'éléments de renforcement croisés d'une nappe à l'autre en faisant avec la direction circonférentielle des angles ($\alpha$1, $\alpha$2) compris entre 8° et 45°, lesdits angles $\alpha$1 et $\alpha$2 étant orientés de part et d'autre de la direction circonférentielle, l'armature de sommet étant coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former un retournement de l'armature de carcasse, ledit retournement de l'armature de carcasse étant séparée de l'armature de carcasse par une première couche de mélange(s) polymérique(s) s'étendant radialement depuis la tringle jusqu'au moins l'extrémité du retournement et ledit retournement de l'armature de carcasse étant axialement vers l'extérieur au contact d'une deuxième couche de mélange polymérique, elle-même au moins au contact d'une troisième couche de mélange polymérique formant la surface extérieure du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche de mélange polymérique formant la surface extérieure d'un flanc :

- les deux couches de sommet de travail étant seules présentes pour constituer l'armature de sommet sur au moins 40% de la largeur axiale de l'armature sommet,
- les éléments de renforcement de la couche de travail radialement la plus extérieure formant un angle $\alpha2$ avec la direction circonférentielle supérieur en valeur absolue à l'angle $\alpha1$ formé par les éléments de renforcement de la couche de travail radialement la plus intérieure avec la direction circonférentielle, la valeur absolue de la différence entre les valeurs absolues des angles $\alpha2$ et $\alpha1$ étant supérieure à 4°,
- l'angle moyen $\alpha$ satisfaisant la relation :

$$14+131*\exp(-L/100) < \alpha < 20+164*\exp(-L/100),$$

$\alpha$ étant défini par la relation $\text{Arctan}((\tan(|\alpha1|)*\tan(|\alpha2|))^{1/2})$, L étant la largeur maximum du pneumatique mesurée selon la direction axiale et exprimée en mm,
- dans une coupe méridienne dudit pneumatique, la distance entre l'extrémité du retournement de l'armature de carcasse et le point radialement le plus intérieur du cercle circonscrit à la tringle est comprise entre 45 et 90% de la distance entre le point axialement le plus extérieur de la partie principale de la couche d'armature de carcasse et le point radialement le plus intérieur du cercle circonscrit à la tringle,
- dans une coupe méridienne dudit pneumatique, le retournement de l'armature de carcasse et l'armature de carcasse sont les seules couches d'éléments de renforcement dont l'allongement à rupture est inférieur à 6 % présentes dans une zone du flanc constituant au moins 90% de la surface du flanc comprise radialement entre l'extrémité du retournement et le point radialement le plus à l'extérieur de la tringle,
- dans une coupe méridienne dudit pneumatique, radialement vers l'extérieur, à partir d'un point C du retournement situé à une distance du point radialement le plus intérieur du cercle circonscrit à la tringle comprise entre 30 et 55% de la distance entre l'extrémité du retournement de l'armature de carcasse et le point radialement le plus intérieur du cercle circonscrit à la tringle, le retournement de l'armature de carcasse et l'armature de carcasse sont couplés sur une longueur comprise entre 15 et 65% de la distance entre l'extrémité du retournement de l'armature de carcasse et le point radialement le plus intérieur du cercle circonscrit à la tringle, pour être ensuite découplés par la première couche de mélange(s) polymérique(s) jusqu'à l'extrémité du retournement sur une longueur comprise entre 5 et 40 % de la distance entre l'extrémité du retournement de l'armature de carcasse et le point radialement le plus intérieur du cercle circonscrit à la tringle.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La largeur L et les différents rayons sont mesurés sur un pneumatique monté sur sa jante nominale et gonflé à sa pression nominale, et sont exprimés en millimètres.

Les angles $\alpha1$ et $\alpha2$, exprimés en degré, sont également mesurés sur une coupe du pneumatique. Les mesures d'angles sont selon l'invention réalisées au niveau du plan médian circonférentiel.

La position du point axialement le plus extérieur de la partie principale de la couche d'armature de carcasse est déterminée sur un pneumatique monté et gonflé selon les conditions nominales. Cette mesure peut par exemple être réalisée selon une technique de tomographie.

Les positions des points radialement le plus intérieur et radialement le plus extérieur du cercle circonscrit à la tringle sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

De la même façon, les différentes distances, notamment mesurées depuis le point radialement le plus intérieur du cercle circonscrit à la tringle, sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

Au sens de l'invention, la couche d'armature de carcasse et le retournement d'armature de carcasse sont dits couplés si les éléments de renforcement respectifs de la couche d'armature de carcasse et du retournement d'armature de carcasse sont séparés par une épaisseur de mélange caoutchouteux sensiblement constante et d'au plus 5 mm sur une longueur supérieure à 15% de la distance entre l'extrémité du retournement de l'armature de carcasse et le point radialement le plus intérieur du cercle circonscrit à la tringle. L'épaisseur de mélange caoutchouteux séparant les éléments de renforcement respectifs de la couche d'armature de carcasse et du retournement d'armature de carcasse est mesurée selon la direction normale aux éléments de renforcement de l'armature de carcasse. Avantageusement selon l'invention, les éléments de renforcement respectifs de la couche d'armature de carcasse et du retournement d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la couche d'armature de carcasse et du retournement d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la couche d'armature de carcasse et le retournement d'armature de carcasse sont dits découplés si, radialement à l'extérieur de la zone de couplage, l'épaisseur de mélange caoutchouteux séparant les éléments de renforcement respectifs de la couche d'armature de carcasse et du retournement d'armature de carcasse est supérieure à celle de la zone de couplage. Les éléments de renforcement respectifs de la couche d'armature de carcasse et du retournement d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de l'armature de carcasse entre les éléments de renforcement respectifs de la couche d'armature de carcasse et du retournement d'armature de carcasse. De préférence selon l'invention, dans la zone de découplage, les éléments de renforcement respectifs de la couche d'armature de carcasse et du retournement d'armature de carcasse sont séparés d'au plus 6 mm et de préférence ils sont séparés d'au moins 4 mm.

Au sens de l'invention, la première couche de mélange(s) polymérique(s) peut être constituée de plusieurs mélanges polymériques dont les propriétés de rigidité et plus spécifiquement dont les modules d'élasticité sous tension à 10 % d'allongement peuvent varier. Dans le cas de plusieurs mélanges polymériques constituant la première couche, ils forment avantageusement un gradient de rigidité décroissant depuis la tringle vers l'extrémité radialement extérieure de ladite première couche.

Avantageusement encore, le pneumatique selon l'invention est destiné à être gonflé à une pression de gonflage P supérieure ou égale à 6.5 bar.

De préférence selon l'invention, les éléments de renforcement desdites deux couches de sommet de travail sont métalliques.

Les inventeurs ont su mettre en évidence qu'un pneumatique ainsi réalisé selon l'invention peut être fabriqué à un coût inférieur comparé aux pratiques usuelles. Il est notamment par exemple possible de diminuer le temps de cuisson dudit pneumatique pour des conditions de température et de pression données dans le moule de cuisson.

Le pneumatique ainsi défini selon l'invention présente effectivement en comparaison de pneumatiques plus usuels à la fois un sommet et des zones de bourrelets allégés dont les temps de cuisson nécessaires à l'obtention des propriétés souhaitées sont sensiblement équivalents pour le sommet et les zones de bourrelets et inférieurs aux temps de cuisson des pneumatiques plus usuels. Cette réduction des temps de cuisson est liée à la meilleure montée en température des mélanges polymériques du fait des épaisseurs plus faibles.

Le pneumatique ainsi défini selon l'invention permet de réduire le temps de cuisson sans nécessité une adaptation de l'un ou l'autre des mélanges polymériques pour réduire ou augmenter le temps nécessaire à la vulcanisation qui en outre serait différente en fonction des dimensions du pneumatique. Il n'est pas non plus nécessaire de concevoir des moules complexes et onéreux avec des matériaux différents pour obtenir des conductivités thermiques variant localement et encore une fois spécifique en termes de conception en fonction de la dimension du pneumatique.

Par ailleurs, l'allègement de l'armature sommet et des zones du bourrelet du pneumatique s'accompagne d'une simplification de fabrication et d'une diminution des coûts de fabrication.

Contre toute attente, les résultats ont effectivement mis en évidence que les pneumatiques selon l'invention peuvent être allégés en diminuant le nombre de couches constitutives de l'armature sommet tout en conservant voire améliorant les propriétés d'endurance du sommet du pneumatique notamment à l'égard de chocs apparaissant sur la bande de roulement par exemple lors de roulage sur sol caillouteux. Il est en effet connu de l'homme du métier que pour améliorer les performances d'endurance de l'armature sommet d'un pneumatique à l'égard de ce type de chocs, il est usuel d'augmenter le nombre de couches d'éléments de renforcement.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

Avantageusement selon l'invention, le ratio d'utilisation du potentiel de rupture F2/FR2 de la couche de travail radialement la plus extérieure étant inférieur à 1/6, dans lequel :

FR2 est la force rupture en extension uniaxiale des câbles de la couche de travail radialement la plus extérieure,

$$F2 = p_2 * Tc * [(\tan(|\alpha1|)/(\tan(|\alpha1|)+\tan(|\alpha2|))) / \cos^2(|\alpha2|) + C_F],$$

avec

$$Tc = 0.092 * P * Rs * (1-(Rs^2-R_L^2)/(2*Rt*Rs)),$$

P : la pression de gonflage du pneumatique,

$$C_F = 0.00035*(\min((L-80) / \sin(|\alpha1|), (L-80) / \sin(|\alpha2|), 480)-480),$$

$p_2$ : le pas de pose des éléments de renforcement de la couche de sommet de travail radialement la plus extérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

$R_L$ : moyenne des rayons des points axialement les plus à l'extérieur de la partie principale de la couche d'armature de carcasse de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

L'épaisseur Es et le pas $p_2$ sont mesurés sur une coupe du pneumatique et sont exprimés en millimètres.

Les inventeurs font encore le constat que le choix de la valeur absolue de la différence entre les valeurs absolues des angles précités α1 et α2 associé à l'angle moyen α et au ratio d'utilisation du potentiel de rupture F2/FR2 tels que définis selon cette réalisation avantageuse de l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel ; les inventeurs font ainsi le constat que la suppression de la couche de protection est rendue possible et permet de contribuer à l'allègement du pneumatique.

Selon un mode de réalisation préféré de l'invention, la valeur absolue de la différence entre les valeurs absolues des angles $\alpha2$ et $\alpha1$ est supérieure ou égale à 10° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

$$F1 = p_1 * Tc * [(\tan(|\alpha2|)/(\tan(|\alpha1|)+\tan(|\alpha2|))) / \cos^2(|\alpha1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon un mode de réalisation de l'invention, les éléments de renforcement des couches de sommet de travail sont des câbles métalliques inextensibles.

Selon un mode de réalisation avantageux de l'invention, les deux couches de sommet de travail sont seules présentes pour constituer l'armature de sommet sur au moins 60% de la largeur axiale de l'armature sommet et avantageusement encore sur au moins 80% de la largeur axiale de l'armature sommet. Ces modes de réalisations avantageux de l'invention vont dans le sens d'un allègement encore plus important du pneumatique.

Selon un mode de réalisation préféré de l'invention, optimisant l'amincissement du sommet du pneumatique, les deux couches de sommet de travail sont seules présentes pour constituer l'armature de sommet sur la totalité de la largeur axiale de l'armature sommet.

Les essais réalisés ont par ailleurs montré que les zones des bourrelets des pneumatiques ainsi réalisés selon l'invention contribuent à une diminution de la masse des pneumatiques en comparaison de pneumatiques de conception plus usuelle, comportant par exemple des couches d'éléments de renforcement supplémentaires de type raidisseurs, présentent des performances en termes d'endurance des zones des bourrelets, au moins aussi bonnes que celles desdits pneumatiques de conception plus usuelle, voire supérieures.

Ces résultats sont d'autant plus surprenants que les conceptions plus usuelles des zones des bourrelets de ce type de pneumatiques comportent un retournement d'armature de carcasse tel que la distance entre l'extrémité du retournement de l'armature de carcasse et le point radialement le plus intérieur du cercle circonscrit à la tringle est inférieure à 45 % de la distance entre le point axialement le plus extérieur de la partie principale de la couche d'armature de carcasse et le point radialement le plus intérieur du cercle circonscrit à la tringle pour notamment améliorer les performances du pneumatique en termes d'endurance. En effet, il est usuel de concevoir des pneumatiques avec un retournement d'armature de carcasse de longueur réduite pour augmenter la distance entre le retournement d'armature de carcasse et l'armature de carcasse, et ainsi limiter au mieux les déformations de cisaillement qui s'initient entre l'armature de carasse et son retournement notamment du fait des phénomènes de déradialisation qui apparaissent lors du roulage du pneumatique.

Il est également usuel dans la conception des pneumatiques dont l'armature de carcasse présente un retournement, destinés notamment à être monté sur une jante creuse (15° drop center) ou jante à seat coincé et à équiper des véhicules portant de lourdes charges, d'éviter un rapprochement et donc d'autant plus un couplage du retournement avec l'armature de carcasse de façon à prévenir tous risques de cisaillement entre l'armature de carcasse et son retournement qui vient pénaliser la première couche de mélange polymérique qui les sépare.

Les inventeurs ont ainsi su mettre en évidence que les pneumatiques réalisés conformément à l'invention et qui présentent notamment un retournement de l'armature carcasse avec une longueur supérieure aux conceptions plus usuelles, un couplage du retournement avec l'armature carcasse suivi d'un découplage dudit retournement et de l'armature de carcasse, associés aux dimensionnements et positionnement relatifs des différents éléments constitutifs de la zone du bourrelet du pneumatique, permettent d'alléger le pneumatique et contre toute attente de conserver des propriétés en termes d'endurance des zones des bourrelets satisfaisantes, voire de les améliorer.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la couche d'armature de carcasse et du retournement d'armature de carcasse augmente et d'une deuxième partie radialement la plus extérieure dans laquelle l'épaisseur de mélange caoutchouteux séparant les éléments de renforcement respectifs de la couche d'armature de carcasse et du retournement d'armature de carcasse est sensiblement constante.

Le découplage entre le retournement et l'armature de carcasse qui suit la zone de couplage est avantageusement obtenue par une augmentation de l'épaisseur de la première couche de mélange(s) polymérique(s). Ce découplage permet de venir compenser la diminution de la tension dans les éléments de renforcement de l'armature de carcasse lorsque l'on s'approche de l'extrémité de son retournement pour absorber les contraintes de cisaillement entre l'armature de carcasse et son retournement.

Avantageusement selon l'invention, la longueur de découplage est comprise entre 15 et 35% de la distance entre l'extrémité du retournement de l'armature de carcasse et le point radialement le plus intérieur du cercle circonscrit à la tringle.

De préférence selon l'invention, le retournement de l'armature de carcasse et l'armature de carcasse sont couplés sur une longueur comprise entre 25 et 40% de la distance entre l'extrémité du retournement de l'armature de carcasse et le point radialement le plus intérieur du cercle circonscrit à la tringle.

Avantageusement selon l'invention, dans une coupe méridienne dudit pneumatique, l'extrémité radialement extérieure de la première couche de mélange(s) polymérique(s) est radialement extérieure à l'extrémité du retournement de l'armature de carcasse.

Selon une variante de réalisation de l'invention dans une coupe méridienne des zones des bourrelets du pneumatique, l'extrémité du retournement de l'armature de carcasse est radialement extérieure à l'extrémité radialement extérieure de la deuxième couche de mélange polymérique.

Selon d'autres variantes de réalisation de l'invention, dans une coupe méridienne des zones des bourrelets du pneumatique, l'extrémité du retournement de l'armature de carcasse est radialement intérieure à l'extrémité radialement extérieure de la deuxième couche de mélange polymérique.

Avantageusement encore selon d'autres variantes de réalisations des zones des bourrelets du pneumatique selon l'invention, l'extrémité radialement extérieure de la deuxième couche de mélange polymérique est radialement extérieure à l'extrémité radialement extérieure de la troisième couche de mélange polymérique.

Avantageusement selon l'invention, l'extrémité radialement intérieure de la deuxième couche de mélange polymérique est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance de la zone des bourrelets du pneumatique et ses performances en termes de résistance au roulement. Ces valeurs permettent par ailleurs, dans le cas d'une armature sommet constituée uniquement des deux couches de travail, d'assurer une meilleure cohésion entre l'armature sommet et l'armature carcasse.

De préférence selon l'invention, le module d'élasticité sous tension à 10 % d'allongement de la première couche de mélange(s) polymérique(s) est inférieur ou égal au module d'élasticité sous tension à 10 % d'allongement du calandrage de la couche d'armature de carcasse. Ce choix permet notamment de concentrer les efforts de cisaillement au sein de la première couche de mélange polymérique.

De préférence encore selon l'invention, le module d'élasticité sous tension à 10 % d'allongement de la première couche de mélange(s) polymérique(s) est supérieur à 50% du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange(s) polymérique(s) tout en assurant de bonnes performances d'endurance.

Avantageusement selon l'invention, le module d'élasticité sous tension à 10 % d'allongement de la deuxième couche de mélange polymérique est inférieur à 150% du module d'élasticité sous tension à 10 % d'allongement du calandrage de la couche d'armature de carcasse et de préférence strictement inférieur à 25 MPa ; il est avantageusement encore supérieur au module d'élasticité sous tension à 10 % d'allongement de la première couche de mélange polymérique. Selon cette réalisation avantageuse de l'invention, la deuxième couche de mélange polymérique confère suffisamment de rigidité pour assurer une bonne tenue en endurance du pneumatique lors des appuis sur les crochets de jante tout en assurant des performances en termes de résistance au roulement satisfaisantes.

Selon un mode réalisation préféré de l'invention, pour favoriser le compromis entre les performances d'endurance et de résistance au roulement, le module d'élasticité sous tension à 10 % d'allongement de la première couche de mélange(s) polymérique(s) est supérieur ou égal au module d'élasticité sous tension à 10 % d'allongement de la troisième couche de mélange polymérique qui est lui-même supérieur ou égal au module d'élasticité sous tension à 10 % d'allongement de la quatrième couche de mélange polymérique.

Selon un mode préféré de réalisation de l'invention, dans tout plan méridien, sur une longueur du retournement d'armature de carcasse délimitée radialement entre l'extrémité dudit retournement et un point situé à une distance du point radialement le plus intérieur du cercle circonscrit à la tringle égale à 65% de la distance entre l'extrémité du retournement de l'armature de carcasse et le point radialement le plus intérieur du cercle circonscrit à la tringle, tout point du retournement de l'armature de carcasse est à une distance de la surface extérieure du pneumatique inférieure à 10 mm. De préférence encore, tout point du retournement de l'armature de carcasse est à une distance de la surface extérieure du pneumatique inférieure à 10 mm sur une longueur du retournement d'armature de carcasse délimitée radialement entre l'extrémité dudit retournement et un point situé à une distance du point radialement le plus intérieur du cercle circonscrit à la tringle égale à 50% de la distance entre l'extrémité du retournement de l'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement d'armature de carcasse et à une distance radiale de l'extrémité du retournement d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement d'armature de carcasse à l'extrémité du retournement d'armature de carcasse, de la quatrième couche de mélange polymérique formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement d'armature de carcasse et à une distance radiale de l'extrémité du retournement d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement d'armature de carcasse à l'extrémité du retournement d'armature de carcasse, de la quatrième couche de mélange polymérique formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange polymérique ainsi réalisée selon l'invention semble permettre de contribuer au meilleur positionnement de la première couche de mélange polymérique et à sa mise en place pour assurer le couplage et le découplage de la couche d'armature de carcasse et du retournement d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allègement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon d'autres variantes de réalisation de l'invention décalant le compromis de performance du pneumatique de façon moins favorable pour ce qui concerne l'allègement et le temps de cuisson/vulcanisation, l'armature de sommet comporte une couche supplémentaire, dite de protection, radialement extérieure aux couches de sommet de travail, de préférence centrée sur le plan médian circonférentiel. Les éléments de renforcements d'un telle couche de protection sont de préférence des éléments de renforcement dits élastiques, orientés par rapport à la direction circonférentielle avec un angle compris entre 8° et 45° et de même sens que l'angle formé par les éléments de renforcement de la couche de travail qui lui est radialement adjacente. De préférence encore, les éléments de renforcements d'une telle couche de protection sont parallèles aux éléments de renforcement de la couche de travail qui lui est radialement adjacente.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

Le pneumatique selon l'invention peut encore comporter une ou plusieurs couches d'éléments de renforcement circonférentiels, avantageusement constituée de deux demi-couches positionnées axialement de part et d'autre du plan médian circonférentiel.

D'autres détails et caractéristiques avantageux de l'invention ressortiront ci-après de la description des exemples de réalisation de l'invention notamment en référence aux figures 1 à 2 qui représentent :

- figure 1, une vue méridienne d'un schéma d'un pneumatique selon un mode de réalisation de l'invention,

- figure 2, une représentation schématique agrandie de la zone du bourrelet du pneumatique de la figure 1.

Les figures ne sont pas représentées à l'échelle pour en simplifier la compréhension.

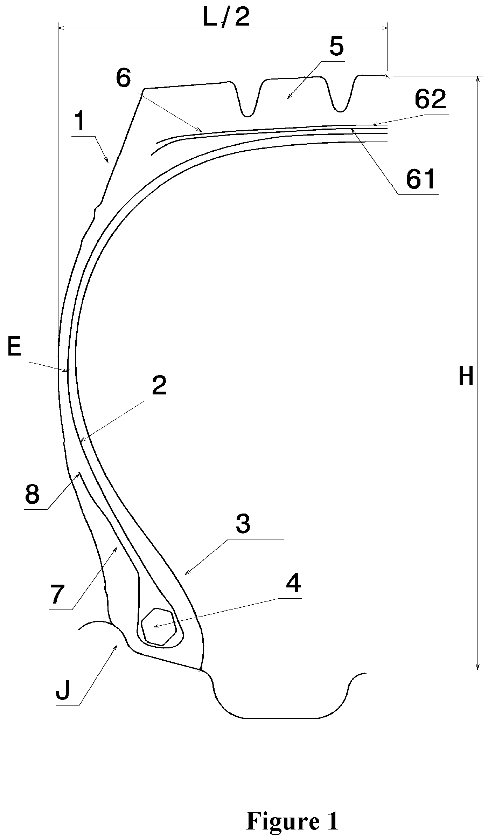

La figure 1 ne représente qu'une demi-vue d'un pneumatique qui se prolonge de manière symétrique par rapport à l'axe XX' qui représente le plan médian circonférentiel, ou plan équatorial, d'un pneumatique.

La figure 1 illustre un pneumatique 1 de dimension 12 R 22.5. Ledit pneumatique 1 comprend une armature de carcasse radiale 2 ancrée dans deux bourrelets. L'armature de carcasse 2 formée d'une seule couche de câbles métalliques, est enroulée dans chacun des bourrelets 3 autour d'une tringle 4 et forme dans chacun des bourrelets 3 un retournement d'armature de carcasse 7 présentant une extrémité 8. Le pneumatique comporte encore une bande de roulement 5.

Sur la figure 1, l'armature de carcasse 2 est frettée conformément à l'invention par une armature de sommet 6, formée radialement de l'intérieur à l'extérieur :

- d'une première couche de travail 61 formée de câbles métalliques orientés d'un angle égal à 16°,

- d'une deuxième couche de travail 62 formée de câbles métalliques orientés d'un angle égal à 30°, croisés avec les câbles métalliques de la première couche de travail 61, les câbles de chacune des couches de travail 61, 62 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm.

Le pneumatique est gonflé à une pression de 8.5 bar.

La largeur axiale $L_{61}$ de la première couche de travail 61 est égale à 220 mm.

La largeur axiale $L_{62}$ de la deuxième couche de travail 62 est égale à 200 mm.

La largeur axiale de la bande de roulement $L_5$ est égale à 215 mm.

La largeur axiale L est égale à 302 mm.

La différence entre les angles formés par les câbles de la première couche de sommet de travail 61 avec la direction circonférentielle et ceux des câbles de la deuxième couche de sommet de travail 62 est égale à 14°.

L'angle moyen est égal à 22.1° et est bien compris entre 20.4° et 28.0°.

La valeur mesurée de Re est égale à 541.7 mm.

La valeur mesurée de Es est égale à 22.3 mm.

La valeur moyenne RL des rayons mesurés est égale à 410 mm.

La valeur Rt déterminée sur le pneumatique est égale à 900 mm.

La valeur calculée de Tc est égale à 362.0 N/mm.

La valeur calculée de $C_F$ est égale à -0.01.

La valeur de F1 est égale à 514.4 N.

La valeur de F2 est égale à 311.2 N.

Les forces ruptures des éléments de renforcement des couches de sommet de travail FR1 et FR2 sont égales à 2600 N.

Le ratio d'utilisation du potentiel de rupture F2/FR2 est égal à 12.0 %.

Le ratio d'utilisation du potentiel de rupture F1/FR1 est égal à 19.8 %.

Le ratio d'utilisation du potentiel de rupture F1/FR1 est 65% supérieur au ratio d'utilisation du potentiel de rupture F2/FR2.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles à couche de structure 1+6+12, non fretté, constitué d'un noyau central formé d'un fil, d'une couche intermédiaire formée de six fils et d'une couche externe formée de douze fils.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

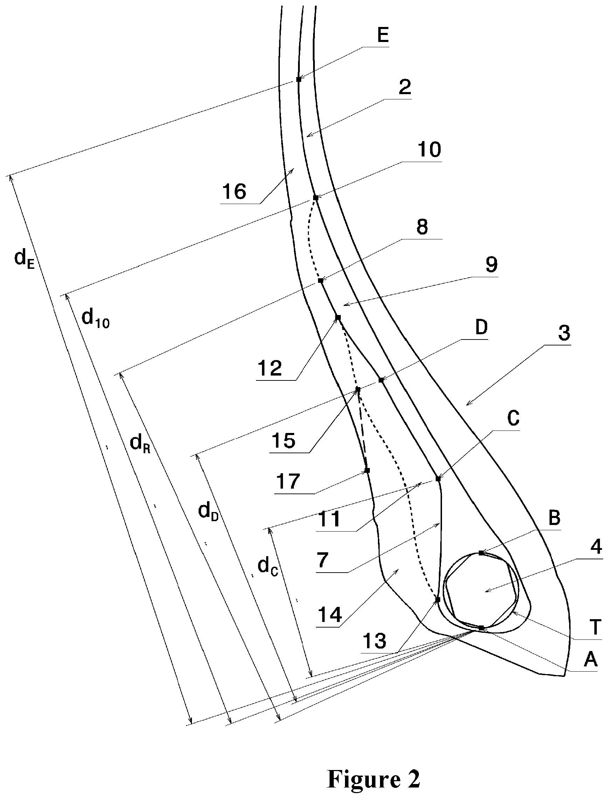

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance $d_E$ entre le point E et le point A est égale à 128 mm.

La distance $d_R$ entre le point 8 et le point A est égale à 90 mm.

Le ratio de la distance $d_R$ sur la distance $d_E$ est égal à 70% et donc compris entre 45 et 90%.

Le retournement 7 de la couche d'armature de carcasse vient se coupler à la partie principale de la couche d'armature de carcasse 2 à partir du point C, tel que la distance $d_C$ entre le point C et le point A est égale à 37 mm.

Le ratio de la distance $d_C$ sur la distance $d_R$ est égal à 41% et donc compris entre 30 et 55%.

Le retournement 7 de la couche d'armature de carcasse est ensuite découplé de la partie principale de la couche d'armature de carcasse 2 à partir du point D, tel que la distance $d_D$ entre le point D et le point A est égale à 66 mm et telle que la longueur de couplage entre le point C et le point D est égale à 29 mm et donc comprise entre 25 et 40 % de la distance $d_R$. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse, est sensiblement constante et égale à 2.9 mm.

La longueur de découplage entre le point D et le point 8 est égale à 21 mm et donc comprise entre 15 et 35 % de la distance $d_R$. La longueur de découplage est mesurée selon la droite passant par les points D et 8.

Le retournement 7 de la couche d'armature de carcasse est séparé de la partie principale de la couche d'armature de carcasse 2 par une première couche de mélange polymérique 9, présentant une extrémité radialement extérieure 10 à une distance $d_{10}$ du point A égale à 117 mm. La première couche de mélange polymérique 9 présente un module d'élasticité sous tension à 10 % d'allongement égal à 7.8 MPa et donc inférieur au module d'élasticité sous tension à 10 % d'allongement des couches de calandrage de l'armature de carcasse 2.

La première couche de mélange polymérique 9 est profilée pour venir en appui sur la tringle 4 et assurer le couplage et découplage entre le retournement de la couche d'armature de carcasse 7 et la partie principale de la couche d'armature de carcasse 2.

Axialement à l'extérieur du retournement 7 de la couche d'armature de carcasse est représentée la deuxième couche de mélange polymérique 11 dont l'extrémité radialement extérieure 12 est radialement à l'intérieure de l'extrémité 8 du retournement 7 de la couche d'armature de carcasse. L'extrémité radialement intérieure 13 de la deuxième couche de mélange polymérique 11 est radialement comprise entre les points A et B, respectivement radialement le plus intérieur et radialement le plus extérieur du cercle circonscrit à la tringle.

La deuxième couche de mélange polymérique 11 présente un module d'élasticité sous tension à 10 % d'allongement égal à 12.5 MPa et donc supérieur au module d'élasticité sous tension à 10 % d'allongement de la première couche de mélange polymérique 9 qui est égal à 7.8 MPa et inférieur à 150% du module d'élasticité sous tension à 10 % d'allongement des couches de calandrage de l'armature de carcasse 2 qui est égal à 9.8 MPa.

Au contact de la deuxième couche de mélange polymérique 11 et radialement sous la tringle, on trouve la troisième couche de mélange polymérique 14, dont l'extrémité axialement la plus extérieure 15 est radialement à l'intérieur de l'extrémité 12 de la deuxième couche de mélange polymérique 11.

La troisième couche de mélange polymérique 14 présente un module d'élasticité sous tension à 10 % d'allongement égal à 7.1 MPa.

Axialement au contact de la première couche de mélange polymérique 9, de la deuxième couche de mélange polymérique 11, et de la troisième couche de mélange polymérique 14, se trouve la quatrième couche de mélange polymérique 16. L'extrémité 17 radialement intérieure de la quatrième couche de mélange polymérique 16 est radialement intérieure à l'extrémité 15 de la troisième couche de mélange polymérique 14.

La quatrième couche de mélange polymérique 16 présente un module d'élasticité sous tension à 10 % d'allongement égal à 3.1 MPa.

Dans des zones situées de part et d'autre de l'extrémité 8 du retournement de la couche d'armature de carcasse 7, le profil de la quatrième couche de mélange polymérique 16 est tel que ladite quatrième couche de mélange polymérique 16 présente une épaisseur, mesurée selon la direction normale aux éléments de renforcement de l'armature de carcasse 2 à l'extrémité 8 du retournement 7, sensiblement constante et égale à 3.3 mm, sur deux longueurs radiales d'environ 5 mm à partir de chacun des deux points situés de part et d'autre de l'extrémité 8 à des distances de la dite extrémité 8 égales à 2.5 mm correspondant à plus de 2.5 fois le diamètre des câbles d'armature de carcasse, celui-ci étant égal à 0.9 mm.

La masse cumulée des deux couches de travail 61, 62, comprenant la masse des câbles métalliques et des mélanges de calandrage, se monte ainsi à 7.1 Kg.

La masse du pneumatique selon l'invention est de 53.5 Kg.

Le pneumatique selon l'invention est comparé à un pneumatique de référence R de même dimension qui diffère du pneumatique selon l'invention d'une part par son armature de sommet formée radialement de l'intérieur à l'extérieur :

- d'une couche de triangulation, constituée de deux demi nappes, formée de câbles métalliques inextensibles 9.28 non frettés, orientés d'un angle égal à 65°,

- d'une première couche de travail formée de câbles métalliques orientés d'un angle égal à 26°,

- d'une seconde couche de travail formée de câbles métalliques orientés d'un angle égal à 18° et croisés aux câbles métalliques de la première couche de travail, les câbles de chacune des couches de travail étant orientés de part et d'autre de la direction circonférentielle,

- d'une couche de protection formée de câbles métalliques élastiques 6.35.

Les câbles métalliques des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm. Les deux couches de sommet de travail ne diffèrent donc des couches de sommet de travail du pneumatique selon l'invention que par les angles.

Le pneumatique de référence R diffère d'autre part du pneumatique selon l'invention par la présence de raidisseurs et une zone du bourrelet plus usuelle avec notamment une distance entre l'extrémité du retournement de la couche d'armature de carcasse et le point radialement le plus intérieur du cercle circonscrit à la tringle égale à 37% de la distance entre le point axialement le plus extérieur de la partie principale de la couche d'armature de carcasse et le point radialement le plus intérieur du cercle circonscrit à la tringle et une deuxième couche de mélange polymérique dont le module d'élasticité sous tension à 10 % d'allongement est égal à 3.7 MPa et inférieur à celui des calandrages de la couche d'armature de carcasse qui est égal à 9.8 MPa.

Le pneumatique de référence est gonflé à une pression de 8.5 bar.

La largeur axiale globale de la couche triangulation est égale à 180 mm, chacune des demi nappes présentant une largeur égale à 60 mm.

La largeur axiale de la première couche de travail est égale à 220 mm.

La largeur axiale de la deuxième couche de travail est égale à 200 mm.

La largeur axiale de la couche de protection est égale à 136 mm.

La valeur absolue de la différence entre les valeurs absolues des angles formés par les câbles de la première couche de sommet de travail avec la direction circonférentielle et ceux des câbles de la deuxième couche de sommet de travail est égale à 8°, l'angle le plus grand en valeur absolue étant celui de la couche de sommet de travail radialement la plus intérieure, contrairement à l'invention.

L'angle moyen est égal à 21.7°.

La valeur de F1 est égale à 320 N.

La valeur de F2 est égale à 392 N.

Les valeurs F1 et F2 sont obtenues par une simulation éléments finis, le nombre élevés de nappes de renforcement dans le sommet ne permettant pas l'utilisation d'un modèle analytique simple.

Les forces ruptures des éléments de renforcement des couches de sommet de travail FR1 et FR2 sont égales à 2600 N.

Le ratio d'utilisation du potentiel de rupture F2/FR2 est égal à 15.1 %.

Le ratio d'utilisation du potentiel de rupture F1/FR1 est égal à 12.3 %.

Le ratio d'utilisation du potentiel de rupture F1/FR1 est 22.7 % inférieur au ratio d'utilisation du potentiel de rupture F2/FR2.

La masse cumulée des couches de travail du pneumatique de référence, de la couche de protection et de la couche de triangulation, comprenant la masse des câbles métalliques et des mélanges de calandrage, se monte à 10.0 Kg.

La masse du pneumatique de référence est de 62.9 Kg.

Les temps nécessaires à la cuisson des pneumatiques à une température de 145.5 °C côté moule, 158 °C côté cavité du pneumatique et à une pression de 16 bar sont donnés dans le tableau suivant (ils sont exprimés en minutes):

| Référence | 48 |
|-----------|-----|
| Invention | 40 |

Des essais ont été réalisés avec des pneumatiques réalisés selon l'invention et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 3550 daN progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance de l'armature sommet à celles des pneumatiques de référence lors de roulage sur des sols bitumineux.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence.

| Référence | 100 |
|-----------|-----|
| Invention | 115 |

Ces résultats montrent que malgré un allégement du pneumatique, notamment par une diminution de la masse de son armature sommet, l'énergie à rupture lors d'un choc sur la surface de la bande de roulement est significativement supérieure.

D'autres essais d'endurance ont été réalisés afin de tester l'endurance des zones du bourrelet du pneumatique en faisant rouler deux pneus rabotés l'un sur l'autre avec une pression régulée de 8b, avec un gonflage à l'azote et une charge de 6786 daN à une vitesse de 30km/h.

Les essais ont été réalisés pour les pneumatiques selon l'invention avec des conditions identiques à celles appliquées aux pneumatiques de référence.

Les essais réalisés conduisent pour les pneumatiques de référence R à des performances établissant la base 100. Les tests sont arrêtés lors de l'apparition d'une dégradation de la zone basse du pneumatique.

Les résultats des mesures sont présentés dans le tableau suivant. Ils sont exprimés en distance relative, une valeur de 100 étant attribuée au pneumatique R.

| Référence | 100 |
|-----------|-----|
| Invention | 254 |

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique R.

| Référence | 100 |
|-----------|-----|
| Invention | 98 |

**Revendications**

1.  Pneumatique (1) pour véhicule de type poids lourd, destiné à être monté sur une jante creuse (J) du type « 15° drop centre », à armature de carcasse radiale (2), constituée d'une unique couche d'armature de carcasse formée d'éléments de renforcement insérés entre deux couches de calandrage de mélange polymérique, ledit pneumatique comprenant une armature de sommet (6) comprenant deux couches de sommet de travail d'éléments (61, 62) de renforcement croisés d'une couche à l'autre en faisant avec la direction circonférentielle des angles ($\alpha$1, $\alpha$2) compris entre 8° et 45°, lesdits angles $\alpha$1 et $\alpha$2 étant orientés de part et d'autre de la direction circonférentielle, l'armature sommet (6) étant coiffée radialement d'une bande de roulement (5), ladite bande de roulement étant réunie à deux bourrelets (3) par l'intermédiaire de deux flancs, la couche d'éléments de renforcement de l'armature de carcasse étant ancrée dans chacun des bourrelets (3) par retournement autour d'une tringle (4) pour former une partie principale de la couche d'armature de carcasse s'étendant d'une tringle (4) à l'autre et un retournement de la couche d'armature de carcasse (7) dans chacun des bourrelets (3), ledit retournement de la couche d'armature de carcasse (7) étant séparé de la partie principale de la couche d'armature de carcasse (2) par une première couche (9) de mélange(s) polymérique(s) s'étendant radialement depuis la tringle (4) jusqu'au moins l'extrémité (8) du retournement de la couche d'armature de carcasse (7) et ledit retournement de la couche d'armature de carcasse étant axialement vers l'extérieur au contact d'une deuxième couche (11) de mélange polymérique, elle-même au moins au contact d'une troisième couche (14) de mélange polymérique formant la surface extérieure du pneumatique (1) dans la zone du bourrelet (3), ladite troisième couche (14) de mélange polymérique étant destinée notamment à venir au contact de la jante (J), ladite troisième couche (14) de mélange polymérique étant radialement vers l'extérieur au contact d'une quatrième couche (16) de mélange polymérique formant la surface extérieure d'un flanc, dans une coupe méridienne dudit pneumatique (1) :

     - la distance ($d_R$) entre l'extrémité (8) du retournement (7) de la couche d'armature de carcasse et le point (A) radialement le plus intérieur du cercle (T) circonscrit à la tringle (4) étant comprise entre 45 et 90% de la distance ($d_E$) entre le point (E) axialement le plus extérieur de la partie principale de la couche d'armature de carcasse (2) et le point (A) radialement le plus intérieur du cercle (T) circonscrit à la tringle (4),
     - le retournement (7) de la couche d'armature de carcasse et la partie principale de la couche d'armature de carcasse (2) étant les seules couches d'éléments de renforcement dont l'allongement à rupture est inférieur à 6 % présentes dans une zone du flanc constituant au moins 90% de la surface du flanc comprise radialement entre l'extrémité (8) du retournement (7) de la couche d'armature de carcasse et le point (B) radialement le plus à l'extérieur de la tringle (4),
     - radialement vers l'extérieur, à partir d'un point C du retournement (7) de la couche d'armature de carcasse situé à une distance ($d_C$) du point (A) radialement le plus intérieur du cercle (T) circonscrit à la tringle (4) comprise entre 30 et 55% de la distance ($d_R$) entre l'extrémité (8) du retournement (7) de la couche d'armature de carcasse et le point (A) radialement le plus intérieur du cercle (T) circonscrit à la tringle (4), le retournement (7) de la couche d'armature de carcasse et la partie principale de la couche d'armature (2) de carcasse étant couplés sur une longueur comprise entre 15 et 65% de la distance ($d_R$) entre l'extrémité (8) du retournement (7) de la couche d'armature de carcasse et le point (A) radialement le plus intérieur du cercle (T) circonscrit à la tringle (4), pour être ensuite découplés par la première couche (9) de mélange(s) polymérique(s) jusqu'à l'extrémité (8) du retournement (7) de la couche d'armature de carcasse sur une longueur comprise entre 5 et 40 % de la distance ($d_R$) entre l'extrémité (8) du retournement (7) de la couche d'armature de carcasse et le point (A) radialement le plus intérieur du cercle (T) circonscrit à la tringle (4), les éléments de renforcement respectifs de la couche d'armature de carcasse et du retournement d'armature de carcasse étant couplés lorsqu'ils sont séparés par une épaisseur de mélange caoutchouteux sensiblement constante et d'au plus 5 mm, **caractérisé en ce que :**

- lesdites deux couches de sommet de travail (61, 62) sont seules présentes pour constituer l'armature de sommet (6) sur au moins 40 % de la largeur axiale de l'armature sommet (6),
- **en ce que** les éléments de renforcement de la couche de travail (62) radialement la plus extérieure forment un angle $\alpha2$ avec la direction circonférentielle supérieur en valeur absolue à l'angle $\alpha1$ formé par les éléments de renforcement de la couche de travail (61) radialement la plus intérieure avec la direction circonférentielle,
- **en ce que** la valeur absolue de la différence entre les valeurs absolues des angles $\alpha2$ et $\alpha1$ est supérieure à 4°,
- **en ce que** l'angle moyen $\alpha$ satisfait la relation :

$$14+131*\exp(-L/100) < \alpha < 20+164*\exp(-L/100),$$

$\alpha$ étant défini par la relation $\text{Arctan}((\tan(|\alpha1|)*\tan(|\alpha2|))^{1/2})$, L étant la largeur maximum du pneumatique mesurée selon la direction axiale et exprimée en mm.

2. Pneumatique (1) selon la revendication 1, **caractérisé en ce que** le ratio d'utilisation du potentiel de rupture F2/FR2 de la couche de travail radialement la plus extérieure est inférieur à 1/6, dans lequel :
FR2 est la force rupture en extension uniaxiale des câbles de la couche de travail radialement la plus extérieure,

$$F2 = p_2 * Tc * [(\tan(|\alpha1|)/((\tan(|\alpha1|)+\tan(|\alpha2|)))) / \cos^2(|\alpha2|) + C_F],$$

avec

$$Tc = 0.092 * P * Rs * ( 1-(Rs^2-R_L^2)/(2*Rt*Rs) ),$$

P : la pression de gonflage du pneumatique,

$$C_F = 0.00035*(\min((L-80) / \sin(|\alpha1|), (L-80) / \sin(|\alpha2|), 480)-480),$$

$p_2$ : le pas de pose des éléments de renforcement de la couche de sommet de travail radialement la plus extérieure, mesuré perpendiculairement aux éléments de renforcement au niveau du médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus à l'intérieure,
RL : moyenne des rayons des points axialement les plus à l'extérieur de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement,

les mesures de force à la rupture étant effectuées en traction selon la norme ISO 6892 de 1984.

3. Pneumatique (1) selon la revendication 1 ou 2, **caractérisé en ce que** les éléments de renforcement desdites deux couches de sommet de travail (61, 62) sont métalliques.

4.  Pneumatique (1) selon la revendication 1 ou 2, **caractérisé en ce que** la valeur absolue de la différence entre les valeurs absolues des angles $\alpha 2$ et $\alpha 1$ est supérieure ou égal à 10°, et de préférence supérieur à 14°.

5.  Pneumatique (1) selon l'une des revendications 1 à 4 prise en combinaison avec la revendication 2, **caractérisé en ce que** le ratio d'utilisation du potentiel de rupture F2/FR2 de la couche de travail (62) radialement la plus extérieure est inférieur à 1/8.

6.  Pneumatique (1) selon l'une des revendications 1 à 5, **caractérisé en ce que** le ratio d'utilisation du potentiel de rupture F1/FR1 de la couche de travail (61) radialement la plus intérieure est inférieur à 1/3, dans lequel :
    FR1 est la force rupture en extension uniaxiale des câbles de la couche de travail radialement la plus intérieure,

$$F1 = p_1 * Tc * [(\tan(|\alpha 2|)/((\tan(|\alpha 1|)+\tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel,

$$Tc = 0.092 * P * Rs * (1-(Rs^2-RL^2)/(2*Rt*Rs)),$$

P : la pression de gonflage du pneumatique,

$$CF = 0.00035 * (\min((L-80) / \sin(|\alpha 1|), (L-80) / \sin(|\alpha 2|), 480)-480),$$

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus à l'intérieure,
RL : moyenne des rayons des points axialement les plus à l'extérieur de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à 1/4, 1/2 et 3/4 de la largeur de la bande de roulement,

les mesures de force à la rupture étant effectuées en traction selon la norme ISO 6892 de 1984.

7.  Pneumatique (1) selon la revendication 6, **caractérisé en ce que** le ratio d'utilisation du potentiel de rupture F1/FR1 de la couche de travail (61) radialement la plus intérieure est au moins 30 % supérieur au ratio d'utilisation du potentiel de rupture F2/FR2 de la couche de travail (62) radialement la plus extérieure.

8.  Pneumatique (1) selon l'une des revendications précédentes, **caractérisé en ce que** les deux couches de sommet de travail (61, 62) sont seules présentes pour constituer l'armature de sommet sur la totalité de la largeur axiale de l'armature sommet (6).

9.  Pneumatique (1) selon l'une des revendications précédentes, **caractérisé en ce que** l'extrémité (10) radialement extérieure de la première couche (9) de mélange(s) polymérique(s) est radialement extérieure à l'extrémité (8) du retournement (7) de la couche d'armature de carcasse.

10.  Pneumatique (1) selon l'une des revendications précédentes, **caractérisé en ce que** l'extrémité (12) radialement extérieure de la deuxième couche (11) de mélange polymérique est radialement extérieure à l'extrémité (15) radialement extérieure de la troisième couche (14) de mélange polymérique.

11. Pneumatique (1) selon l'une des revendications précédentes, **caractérisé en ce que** la longueur de découplage est comprise entre 15 et 35 % de la distance ($d_R$) entre l'extrémité (8) du retournement (7) de l'armature de carcasse et le point (A) radialement le plus intérieur du cercle (T) circonscrit à la tringle (4).

12. Pneumatique (1) selon l'une des revendications précédentes, **caractérisé en ce que** le retournement (7) de l'armature de carcasse et l'armature de carcasse (2) sont couplés sur une longueur comprise entre 25 et 40% de la distance ($d_R$) entre l'extrémité (8) du retournement (7) de l'armature de carcasse et le point (A) radialement le plus intérieur du cercle (T) circonscrit à la tringle (4).

13. Pneumatique (1) selon l'une des revendications précédentes, **caractérisé en ce que** l'extrémité (13) radialement intérieure de la deuxième couche (11) de mélange polymérique est radialement comprise entre le point (B) radialement le plus extérieur du cercle (T) circonscrit à la tringle (4) et le point (A) radialement le plus intérieur du cercle (T) circonscrit à la tringle (4).

14. Pneumatique (1) selon l'une des revendications précédentes, **caractérisé en ce que** le module d'élasticité sous tension à 10 % d'allongement des couches de calandrage de la couche d'armature de carcasse (2) est compris entre 4 et 16 MPa et de préférence entre 8 et 12 MPa,
les mesures de module étant effectuées en traction selon la norme AFNOR-NFT-46002 de septembre 1988 dans des conditions normales de température et d'hygrométrie selon la norme AFNOR-NFT-40101 de décembre 1979.

15. Pneumatique (1) selon l'une des revendications précédentes, **caractérisé en ce que** le module d'élasticité sous tension à 10 % d'allongement de la première couche (9) de mélange(s) polymérique(s) est inférieur ou égal au module d'élasticité sous tension à 10 % d'allongement du calandrage de la couche d'armature de carcasse (2), les mesures de module étant effectuées en traction selon la norme AFNOR-NFT-46002 de septembre 1988 dans des conditions normales de température et d'hygrométrie selon la norme AFNOR-NFT-40101 de décembre 1979.


**Patentansprüche**

1. Reifen (1) für ein Fahrzeug vom Typ Lastkraftwagen, der dazu bestimmt ist, auf eine Tiefbettfelge (J) vom Typ "15° Drop Centre" montiert zu werden, mit einer radialen Karkassenbewehrung (2), die aus einer einzelnen Karkassenbewehrungslage besteht, die aus Verstärkungselementen gebildet ist, die zwischen zwei Kalandrierlagen aus einer Polymermischung eingefügt sind, wobei der Reifen eine Scheitelbewehrung (6) beinhaltet, die zwei Arbeitsscheitellagen (61, 62) aus Verstärkungselementen beinhaltet, welche sich von einer Lage zur anderen kreuzen, indem sie mit der Umfangsrichtung Winkel ($\alpha1$, $\alpha2$) zwischen 8° und 45° bilden, wobei die Winkel $\alpha1$ und $\alpha2$ auf beiden Seiten der Umfangsrichtung ausgerichtet sind, wobei die Scheitelbewehrung (6) radial von einem Laufstreifen (5) überlagert wird, wobei der Laufstreifen mittels zweier Flanken mit zwei Wülsten (3) verbunden ist, wobei die Lage aus Verstärkungselementen der Karkassenbewehrung durch Umschlagen um einen Wulstkern (4) in jedem der Wülste (3) verankert ist, um einen Hauptteil der Karkassenbewehrungslage, der sich von einem Wulstkern (4) zum anderen erstreckt, und einen Umschlag der Karkassenbewehrungslage (7) in jedem der Wülste (3) zu bilden, wobei der Umschlag der Karkassenbewehrungslage (7) von dem Hauptteil der Karkassenbewehrungslage (2) durch eine erste Lage (9) aus einer oder mehreren Polymermischungen getrennt ist, welche sich von dem Wulstkern (4) bis zu mindestens dem Ende (8) des Umschlags der Karkassenbewehrungslage (7) radial erstreckt, und wobei der Umschlag der Karkassenbewehrungslage axial nach außen mit einer zweiten Lage (11) aus einer Polymermischung in Kontakt ist, die ihrerseits mindestens mit einer dritten Lage (14) aus einer Polymermischung in Kontakt ist, welche die Außenoberfläche des Reifens (1) in dem Bereich des Wulsts (3) bildet, wobei die dritte Lage (14) aus einer Polymermischung insbesondere dazu bestimmt ist, mit der Felge (J) in Kontakt zu kommen, wobei die dritte Lage (14) aus einer Polymermischung radial nach außen mit einer vierten Lage (16) aus einer Polymermischung in Kontakt ist, die die Außenoberfläche einer Flanke bildet, wobei in einem Meridianschnitt des Reifens (1):

- der Abstand ($d_R$) zwischen dem Ende (8) des Umschlags (7) der Karkassenbewehrungslage und dem radial am weitesten innen liegenden Punkt (A) des Kreises (T), der den Wulstkern (4) umschreibt, zwischen 45 und 90 % des Abstands ($d_E$) zwischen dem axial am weitesten außen liegenden Punkt (E) des Hauptteils der Karkassenbewehrungslage (2) und dem radial am weitesten innen liegenden Punkt (A) des Kreises (T), der den Wulstkern (4) umschreibt, beträgt,
- der Umschlag (7) der Karkassenbewehrungslage und der Hauptteil der Karkassenbewehrungslage (2) die einzigen Lagen mit Verstärkungselementen mit einer Bruchdehnung kleiner als 6 % sind, die in einem Bereich der Flanke vorhanden sind, der mindestens 90 % der Oberfläche der Flanke bildet, die sich radial zwischen dem Ende (8) des Umschlags (7) der Karkassenbewehrungslage und dem radial am weitesten außen liegenden Punkt (B) des Wulstkerns (4) befindet,

- radial nach außen, ab einem Punkt C des Umschlags (7) der Karkassenbewehrungslage, der sich in einem Abstand ($d_C$) von dem radial am weitesten innen liegenden Punkt (A) des Kreises (T), der den Wulstkern (4) umschreibt, befindet, der zwischen 30 und 55 % des Abstands ($d_R$) zwischen dem Ende (8) des Umschlags (7) der Karkassenbewehrungslage und dem radial am weitesten innen liegenden Punkt (A) des Kreises (T), der den Wulstkern (4) umschreibt, beträgt, der Umschlag (7) der Karkassenbewehrungslage und der Hauptteil der Karkassenbewehrungslage (2) über eine Länge, die zwischen 15 und 65 % des Abstands ($d_R$) zwischen dem Ende (8) des Umschlags (7) der Karkassenbewehrungslage und dem radial am weitesten innen liegenden Punkt (A) des Kreises (T), der den Wulstkern (4) umschreibt, beträgt, gekoppelt sind, um anschließend über eine Länge, die zwischen 5 und 40 % des Abstands ($d_R$) zwischen dem Ende (8) des Umschlags (7) der Karkassenbewehrungslage und dem radial am weitesten innen liegenden Punkt (A) des Kreises (T), der den Wulstkern (4) umschreibt, beträgt, durch die erste Lage (9) aus einer oder mehreren Polymermischungen bis zu dem Ende (8) des Umschlags (7) der Karkassenbewehrungslage entkoppelt zu sein, wobei die jeweiligen Verstärkungselemente der Karkassenbewehrungslage und des Karkassenbewehrungsumschlags gekoppelt sind, wenn sie durch eine Dicke einer Kautschukmischung, die im Wesentlichen konstant ist und höchstens 5 mm beträgt, getrennt sind, **dadurch gekennzeichnet, dass:**

- die zwei Arbeitsscheitellagen (61, 62) allein vorhanden sind, um die Scheitelbewehrung (6) über mindestens 40 % der axialen Breite der Scheitelbewehrung (6) zu bilden,
- **dass** die Verstärkungselemente der radial am weitesten außen liegenden Arbeitslage (62) mit der Umfangsrichtung einen Winkel $\alpha2$ bilden, dessen Absolutwert größer als der Winkel $\alpha1$ ist, der durch die Verstärkungselemente der radial am weitesten innen liegenden Arbeitslage (61) mit der Umfangsrichtung gebildet wird,
- **dass** der Absolutwert der Differenz zwischen den Absolutwerten der Winkel $\alpha2$ und $\alpha1$ größer als 4° ist,
- **dass** der mittlere Winkel $\alpha$ die folgende Gleichung erfüllt:

$$14+131*\exp(-L/100) < \alpha < 20+164*\exp(-L/100),$$

wobei $\alpha$ durch die Gleichung Arctan $((\tan(|\alpha1|)*\tan(|\alpha2|))^{1/2})$ definiert wird, wobei L die maximale Breite des Reifens, gemessen in Axialrichtung und ausgedrückt in mm, ist.

2. Reifen (1) nach Anspruch 1, **dadurch gekennzeichnet, dass** der Ausschöpfungsgrad des Bruchpotentials F2/FR2 der radial am weitesten außen liegenden Arbeitslage kleiner als 1/6 ist, wobei:
FR2 die Bruchkraft bei einaxialer Ausdehnung der Kabel der radial am weitesten außen liegenden Arbeitslage ist,

$$F2 = p_2*Tc*[(\tan(|\alpha1|)/((\tan(|\alpha1|)+\tan(|\alpha2|)))/\cos^2(|\alpha2|)+C_F],$$

mit

$$T_C = 0,092*P*Rs*(1-(Rs^2-R_L^2)/(2*Rt*Rs)),$$

P: Fülldruck des Reifens,

$$C_F = 0,00035*(\min((L-80)/\sin(|\alpha1|),(L-80)/\sin(|\alpha2|),480)-480),$$

$p_2$: Schrittweite der Verstärkungselemente der radial am weitesten außen liegenden Arbeitsscheitellage, gemessen senkrecht zu den Verstärkungselementen am Umfangsmittel, Rs = Re-Es,
Re: Außenradius des Reifens, gemessen an dem Punkt, der auf der Oberfläche des Laufstreifens des Reifens radial am weitesten außen liegt, wobei die Oberfläche extrapoliert wird, um die möglichen Hohlräume auszugleichen,

Es: radialer Abstand zwischen dem radial am weitesten außen liegenden Punkt des Reifens und seiner orthogonalen Projektion auf die radial außen liegende Fläche eines Verstärkungselements der radial am weitesten innen liegenden Arbeitsscheitellage,

RL: Mittelwert der Radien der axial am weitesten außen liegenden Punkte auf jeder Seite des Reifens,

Rt: Radius des Kreises, der durch drei Punkte verläuft, die sich auf der Außenoberfläche des Laufstreifens außerhalb der Hohlräume befinden und die ab einem Schulterende mit jeweiligen axialen Abständen von ¼, ½ und ¾ der Breite des Laufstreifens definiert werden,

wobei die Bruchkraftmessungen unter Zug gemäß der Norm ISO 6892 von 1984 durchgeführt werden.

3. Reifen (1) nach Anspruch 1 oder 2, **dadurch gekennzeichnet, dass** die Verstärkungselemente der zwei Arbeitsscheitellagen (61, 62) metallisch sind.

4. Reifen (1) nach Anspruch 1 oder 2, **dadurch gekennzeichnet, dass** der Absolutwert der Differenz zwischen den Absolutwerten der Winkel $\alpha 2$ und $\alpha 1$ größer als oder gleich 10° und vorzugsweise größer als 14° ist.

5. Reifen (1) nach einem der Ansprüche 1 bis 4 in Kombination mit Anspruch 2, **dadurch gekennzeichnet, dass** der Ausschöpfungsgrad des Bruchpotentials F2/FR2 der radial am weitesten außen liegenden Arbeitslage (62) kleiner als 1/8 ist.

6. Reifen (1) nach einem der Ansprüche 1 bis 5, **dadurch gekennzeichnet, dass** der Ausschöpfungsgrad des Bruchpotentials F1/FR1 der radial am weitesten innen liegenden Arbeitslage (61) kleiner als 1/3 ist, wobei:

FR1 die Bruchkraft bei einaxialer Ausdehnung der Kabel der radial am weitesten innen liegenden Arbeitslage ist,

$$ \texttt{F1 = p}_1 \texttt{*Tc*[(tan(|}\alpha\texttt{2|)/((tan|}\alpha\texttt{1|)+tan(|}\alpha\texttt{2|)))/cos}^2\texttt{(|}\alpha\texttt{1|)} $$
$$ \texttt{+C}_\texttt{F}\texttt{],} $$

mit

$\texttt{p}_1$ : Schrittweite der Verstärkungselemente der radial am weitesten innen liegenden Arbeitsscheitellage, gemessen senkrecht zu den Verstärkungselementen an der Umfangsmittelebene,

$$ \texttt{Tc = 0,092*P*Rs*(1-(Rs}^2\texttt{-RL}^2\texttt{)/(2*Rt*Rs)),} $$

P: Fülldruck des Reifens,

$$ \texttt{CF = 0,00035*(min((L-80)/sin(|}\alpha\texttt{1|),(L-} $$
$$ \texttt{80)/sin(|}\alpha\texttt{2|),480)-480),} $$

$$ \texttt{Rs = Re-Es,} $$

Re: Außenradius des Reifens, gemessen an dem Punkt, der auf der Oberfläche des Laufstreifens des Reifens radial am weitesten außen liegt, wobei die Oberfläche extrapoliert wird, um die möglichen Hohlräume auszugleichen,

Es: radialer Abstand zwischen dem radial am weitesten außen liegenden Punkt des Reifens und seiner orthogonalen Projektion auf die radial außen liegende Fläche eines Verstärkungselements der radial am weitesten innen liegenden Arbeitsscheitellage,

RL: Mittelwert der Radien der axial am weitesten außen liegenden Punkte auf jeder Seite des Reifens,

Rt: Radius des Kreises, der durch drei Punkte verläuft, die sich auf der Außenoberfläche des Laufstreifens außerhalb der Hohlräume befinden und die ab einem Schulterende mit jeweiligen axialen Abständen von 1/4, 1/2 und 3/4 der Breite des Laufstreifens definiert werden, wobei die Bruchkraftmessungen unter Zug gemäß der Norm ISO 6892 von 1984 durchgeführt werden.

7. Reifen (1) nach Anspruch 6, **dadurch gekennzeichnet, dass** der Ausschöpfungsgrad des Bruchpotentials F1/FR1 der radial am weitesten innen liegenden Arbeitslage (61) mindestens 30 % größer als der Ausschöpfungsgrad des Bruchpotentials F2/FR2 der radial am weitesten außen liegenden Arbeitslage (62) ist.

8. Reifen (1) nach einem der vorhergehenden Ansprüche, **dadurch gekennzeichnet, dass** die zwei Arbeitsscheitellagen (61, 62) allein vorhanden sind, um die Scheitelbewehrung über die gesamte axiale Breite der Scheitelbewehrung (6) zu bilden.

9. Reifen (1) nach einem der vorhergehenden Ansprüche, **dadurch gekennzeichnet, dass** das radial außen liegende Ende (10) der ersten Lage (9) aus einer oder mehreren Polymermischungen zu dem Ende (8) des Umschlags (7) der Karkassenbewehrungslage radial außen liegt.

10. Reifen (1) nach einem der vorhergehenden Ansprüche, **dadurch gekennzeichnet, dass** das radial außen liegende Ende (12) der zweiten Lage (11) aus einer Polymermischung zu dem radial außen liegenden Ende (15) der dritten Lage (14) aus einer Polymermischung radial außen liegt.

11. Reifen (1) nach einem der vorhergehenden Ansprüche, **dadurch gekennzeichnet, dass** die Entkopplungslänge zwischen 15 und 35 % des Abstands ($d_R$) zwischen dem Ende (8) des Umschlags (7) der Karkassenbewehrung und dem radial am weitesten innen liegenden Punkt (A) des Kreises (T), der den Wulstkern (4) umschreibt, beträgt.

12. Reifen (1) nach einem der vorhergehenden Ansprüche, **dadurch gekennzeichnet, dass** der Umschlag (7) der Karkassenbewehrung und die Karkassenbewehrung (2) über eine Länge gekoppelt sind, die zwischen 25 und 40 % des Abstands ($d_R$) zwischen dem Ende (8) des Umschlags (7) der Karkassenbewehrung und dem radial am weitesten innen liegenden Punkt (A) des Kreises (T), der den Wulstkern (4) umschreibt, beträgt.

13. Reifen (1) nach einem der vorhergehenden Ansprüche, **dadurch gekennzeichnet, dass** das radial innen liegende Ende (13) der zweiten Lage (11) aus einer Polymermischung radial zwischen dem radial am weitesten außen liegenden Punkt (B) des Kreises (T), der den Wulstkern (4) umschreibt, und dem radial am weitesten innen liegenden Punkt (A) des Kreises (T), der den Wulstkern (4) umschreibt, liegt.

14. Reifen (1) nach einem der vorhergehenden Ansprüche, **dadurch gekennzeichnet, dass** der Elastizitätsmodul unter Spannung bei 10 % Dehnung der Kalandrierlagen der Karkassenbewehrungslage (2) zwischen 4 und 16 MPa und vorzugsweise zwischen 8 und 12 MPa liegt, wobei die Modulmessungen unter Zug gemäß der Norm AFNOR-NFT-46002 vom September 1988 unter normalen Temperatur- und Luftfeuchtigkeitsbedingungen gemäß der Norm AFNOR-NFT-40101 vom Dezember 1979 vorgenommen werden.

15. Reifen (1) nach einem der vorhergehenden Ansprüche, **dadurch gekennzeichnet, dass** der Elastizitätsmodul unter Spannung bei 10 % Dehnung der ersten Lage (9) aus einer oder mehreren Polymermischungen kleiner als oder gleich dem Elastizitätsmodul unter Spannung bei 10 % Dehnung der Kalandrierung der Karkassenbewehrungslage (2) ist, wobei die Modulmessungen unter Zug gemäß der Norm AFNOR-NFT-46002 vom September 1988 unter normalen Temperatur- und Luftfeuchtigkeitsbedingungen gemäß der Norm AFNOR-NFT-40101 vom Dezember 1979 vorgenommen werden.

**Claims**

1. Tyre (1) for a heavy duty vehicle, intended to be fitted on a hollow rim, 15° drop centre, (J) having a radial carcass reinforcement (2), made up of a single carcass reinforcement layer formed by reinforcing elements inserted between two calendering layers of polymer compound, said tyre comprising a crown reinforcement (6) comprising two working crown layers of reinforcing elements (61, 62) crossed from one layer to the other, forming angles ($\alpha 1, \alpha 2$) of between 8° and 45° with the circumferential direction, said angles $\alpha 1$ and $\alpha 2$ being oriented on either side of the circumferential direction, the crown reinforcement (6) being capped radially by a tread (5), said tread being joined to two beads (3) via two sidewalls, the layer of reinforcing elements of the carcass reinforcement being anchored in each of the beads (3) by a turn-up around a bead wire (4) in order to form a main part of the carcass reinforcement layer extending from one bead wire (4) to the other and a turn-up of the carcass reinforcement layer (7) in each of the beads (3), said turn-up of the carcass reinforcement layer (7) being separated from the main part of the carcass reinforcement layer (2) by a first layer (9) of polymer compound(s) extending radially from the bead wire (4) to at least the end (8) of the turn-up of the carcass reinforcement layer (7) and said turn-up of the carcass reinforcement layer being in contact, axially towards the outside, with a second layer (11) of polymer compound, itself at least in contact with a third layer (14) of polymer compound forming the outer surface of the tyre (1) in the bead region (3), said third layer (14) of polymer compound being intended notably to come into contact with the rim (J), said third layer (14) of polymer compound being in contact, radially towards the outside, with a fourth layer (16) of polymer compound forming the outer surface of a sidewall, in a meridian section of said tyre (1):

- the distance ($d_R$) between the end (8) of the turn-up (7) of the carcass reinforcement layer and the radially innermost point (A) of the circle (T) circumscribed on the bead wire (4) is between 45 and 90% of the distance ($d_E$) between the axially outermost point (E) of the main part of the carcass reinforcement layer (2) and the radially innermost point (A) of the circle (T) circumscribed on the bead wire (4),
- the turn-up (7) of the carcass reinforcement layer and the main part of the carcass reinforcement layer (2) are the only layers of reinforcing elements, of which the elongation at break is less than 6%, that are present in a sidewall region making up at least 90% of the surface area of the sidewall comprised radially between the end (8) of the turn-up (7) of the carcass reinforcement layer and the radially outermost point (B) of the bead wire (4), radially towards the outside, starting from a point C of the turn-up (7) of the carcass reinforcement layer that is situated at a distance (dc) from the radially innermost point (A) of the circle (T) circumscribed on the bead wire (4) of between 30 and 55% of the distance ($d_R$) between the end (8) of the turn-up (7) of the carcass reinforcement layer and the radially innermost point (A) of the circle (T) circumscribed on the bead wire (4), the turn-up (7) of the carcass reinforcement layer and the main part of the carcass reinforcement layer (2) are coupled along a length of between 15 and 65% of the distance ($d_R$) between the end (8) of the turn-up (7) of the carcass reinforcement layer and the radially innermost point (A) of the circle (T) circumscribed on the bead wire (4), and are then decoupled by the first layer (9) of polymer compound(s) as far as the end (8) of the turn-up (7) of the carcass reinforcement layer along a length of between 5 and 40% of the distance ($d_R$) between the end (8) of the turn-up (7) of the carcass reinforcement layer and the radially innermost point (A) of the circle (T) circumscribed on the bead wire (4), the respective reinforcing elements of the carcass reinforcement layer and of the turn-up of the carcass reinforcement being coupled when they are separated by a thickness of rubber compound that is substantially constant and at most 5 mm, **characterized in that:**

- said two working crown layers (61, 62) are the only ones present to form the crown reinforcement (6) over at least 40% of the axial width of the crown reinforcement (6),
- **in that** the reinforcing elements of the radially outermost working layer (62) form an angle $\alpha2$ with the circumferential direction that is greater in terms of absolute value than the angle $\alpha1$ formed by the reinforcing elements of the radially innermost working layer (61) with the circumferential direction,
- **in that** the absolute value of the difference between the absolute values of the angles $\alpha2$ and $\alpha1$ is greater than 4°,
- **in that** the mean angle $\alpha$ satisfies the relationship:

$$14+131*\exp(-L/100) < \alpha < 20+164*\exp(-L/100),$$

$\alpha$ being defined by the relationship $\mathrm{Arctan}((\tan(|\alpha1|)*\tan(|\alpha2|))^{1/2})$, L being the maximum width of the tyre measured in the axial direction and expressed in mm.

2. Tyre (1) according to Claim 1, **characterized in that** the rupture potential index F2/FR2 of the radially outermost working layer is less than 1/6, wherein:
FR2 is the breaking force in uniaxial extension of the cords of the radially outermost working layer,

$$F2 = p_2 * Tc * [(\tan(|\alpha1|)/((\tan(|\alpha1|)+\tan(|\alpha2|))) / \cos^2(|\alpha2|) + C_F],$$

where

$$Tc = 0.092 * P * Rs* ( 1-(Rs^2-R_L^2)/(2*Rt*Rs) ),$$

P is the tyre inflation pressure,

$$C_F = 0.00035 * (\min((L-80) / \sin(|\alpha 1|), (L-80) / \sin(|\alpha 2|), 480)-480),$$

$p_2$ is the pitch at which the reinforcing elements of the radially outermost working crown layer are laid, measured perpendicularly to the reinforcing elements at the circumferential median,

$$Rs = Re - Es,$$

Re is the external radius of the tyre, measured at the radially outermost point on the tread surface of the tyre, said surface being extrapolated in order to fill any voids there might be,

Es is the radial distance between the radially outermost point of the tyre and the orthogonal projection thereof onto the radially outer face of a reinforcing element of the radially innermost working crown layer,

RL is the mean of the radii of the axially outermost points on each side of the tyre,

Rt is the radius of the circle passing through three points situated on the outer surface of the tread outside the voids, defined from a shoulder end at respective axial distances equal to ¼, ½ and ¾ of the width of the tread, the measures of breaking force being made under tension according to standard ISO 6892 of 1984.

3. Tyre (1) according to Claim 1 or 2, **characterized in that** the reinforcing elements of said two working crown layers (61, 62) are made of metal.

4. Tyre (1) according to Claim 1 or 2, **characterized in that** the absolute value of the difference between the absolute values of the angles $\alpha 2$ and $\alpha 1$ is greater than or equal to 10°, and preferably greater than 14°.

5. Tyre (1) according to one of Claims 1 to 4, in combination with claim 2, **characterized in that** the rupture potential index F2/FR2 of the radially outermost working layer (62) is less than 1/8.

6. Tyre (1) according to one of Claims 1 to 5, **characterized in that** the rupture potential index F1/FR1 of the radially innermost working layer (61) is less than 1/3, wherein:

FR1 is the breaking force in uniaxial extension of the cords of the radially innermost working layer,

$$F1 = p_1 * Tc * [(\tan(|\alpha 2|)/((\tan(|\alpha 1|)+\tan(|\alpha 2|))) / \cos^2(|\alpha 1|) + C_F],$$

where

$p_1$ is the pitch at which the reinforcing elements of the radially innermost working crown layer are laid, measured perpendicularly to the reinforcing elements at the circumferential median plane,

$$Tc = 0.092 * P * Rs * (1-(Rs^2-R_L^2)/(2*Rt*Rs)),$$

P is the tyre inflation pressure,

$$C_F = 0.00035 * (\min((L-80) / \sin(|\alpha 1|), (L-80) / \sin(|\alpha 2|), 480)-480),$$

$$Rs = Re - Es,$$

Re is the external radius of the tyre, measured at the radially outermost point on the tread surface of the tyre, said surface being extrapolated in order to fill any voids there might be,

Es is the radial distance between the radially outermost point of the tyre and the orthogonal projection thereof onto the radially outer face of a reinforcing element of the radially innermost working crown layer,

RL is the mean of the radii of the axially outermost points on each side of the tyre,

Rt is the radius of the circle passing through three points situated on the outer surface of the tread outside the voids, defined from a shoulder end at respective axial distances equal to ¼, ½ and ¾ of the width of the tread, the measures of breaking force being made under tension according to standard ISO 6892 of 1984.

**EP 3 645 315 B1**

7. Tyre (1) according to Claim 6, **characterized in that** the rupture potential index F1/FR1 of the radially innermost working layer (61) is at least 30% higher than the rupture potential index F2/FR2 of the radially outermost working layer (62).

8. Tyre (1) according to one of the preceding claims, **characterized in that** the two working crown layers (61, 62) are the only ones present to form the crown reinforcement over the entire axial width of the crown reinforcement (6).

9. Tyre (1) according to one of the preceding claims, **characterized in that** the radially outer end (10) of the first layer (9) of polymer compound(s) is radially on the outside of the end (8) of the turn-up (7) of the carcass reinforcement layer.

10. Tyre (1) according to one of the preceding claims, **characterized in that** the radially outer end (12) of the second layer (11) of polymer compound is radially on the outside of the radially outer end (15) of the third layer (14) of polymer compound.

11. Tyre (1) according to one of the preceding claims, **characterized in that** the decoupling length is between 15 and 35% of the distance ($d_R$) between the end (8) of the turn-up (7) of the carcass reinforcement and the radially innermost point (A) of the circle (T) circumscribed on the bead wire (4).

12. Tyre (1) according to one of the preceding claims, **characterized in that** the turn-up (7) of the carcass reinforcement and the carcass reinforcement (2) are coupled along a length of between 25 and 40% of the distance ($d_R$) between the end (8) of the turn-up (7) of the carcass reinforcement and the radially innermost point (A) of the circle (T) circumscribed on the bead wire (4).

13. Tyre (1) according to one of the preceding claims, **characterized in that** the radially inner end (13) of the second layer (11) of polymer compound is radially comprised between the radially outermost point (B) of the circle (T) circumscribed on the bead wire (4) and the radially innermost point (A) of the circle (T) circumscribed on the bead wire (4).

14. Tyre (1) according to one of the preceding claims, **characterized in that** the tensile elastic modulus at 10% elongation of the calendering layers of the carcass reinforcement layer (2) is between 4 and 16 MPa and preferably between 8 and 12 MPa, the measures of modulus being made under tension according to standard AFNOR-NFT-46002 of September 1988 in normal temperature and relative humidity conditions according to standard AFNOR-NFT-40101 of December 1979.

15. Tyre (1) according to one of the preceding claims, **characterized in that** the tensile elastic modulus at 10% elongation of the first layer (9) of polymer compound(s) is less than or equal to the tensile elastic modulus at 10% elongation of the calendering of the carcass reinforcement layer (2), the measures of modulus being made under tension according to standard AFNOR-NFT-46002 of September 1988 in normal temperature and relative humidity conditions according to standard AFNOR-NFT-40101 of December 1979.

**Figure 1**

**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2728510
- WO 9924269 A
- FR 2787744
- EP 0818331 A
- FR 2779387
- US 20060000199 A
- WO 2013053879 A
- WO 10055118 A
- US 4568259 A

**Littérature non-brevet citée dans la description**

- **YVES ZÉLICOURT.** Matériaux Plastiques et composites. *Caoutchouc : méthodes d'obtention et propriétés,* 10 Janvier 2015
- **CLAUDE JANIN.** Matériaux Plastiques et composites. *Matières premières du caoutchouc,* 10 Décembre 2016